# EUROPEAN PATENT APPLICATION

(11) **EP 2 098 940 A1**
(43) Date of publication of application: **09.09.2009**
(21) Application number: 09002823.4
(22) Date of filing: 27.02.2009
(51) Int. Cl.: G06F 1/16, G06F 1/26

(54) **Foldable cover of a computer apparatus**

(30) Priority: 29.02.2008 TW 97203538 U
(71) Applicant: Giga-Byte Technology Co., Ltd., Hsin-Tien T'ai pei (TW)
(72) Inventor: Chiu, Chih Chiang, Taipei County (TW); Kao, Lin Yu, Taipei County (TW); Lin, Kuen Chieh, Taipei County (TW); Huang, Shih Yuan, Taipei County (TW)
(74) Representative: Brandenburger, Karin

(57) **Abstract**

A separate-able multimedia apparatus includes a computer apparatus and an electronic multimedia device. Both can combine to make up a standard system via concrete the link interfaces. Moreover, after separating from each other, one is a portable computer and the other is a web TV device. Wherein the multimedia can work independently, and the computer apparatus is easier to carry so as to save more users's cost and increase the effect on convenience.

## Description

### BACKGROUND OF THE INVENTION

### Field of the Invention

The present invention generally relates to a foldable cover, and more particular, a foldable cover of a computer apparatus.

### Description of the Related Art

A conventional cover of a portable computer apparatus is for protecting the computer apparatus put in the cover, which is able to effectively protect the computer apparatus and make the computer apparatus easy to carry. Part of portable computer apparatus input data manly by hand-writing input or virtual keyboard input which is without a concrete keyboard. And hand-writing input or virtual keyboard input is slower, so users feel inconvenient to input data. If a cover can have the both functions for protection and data-input, it becomes more convenient for using a portable computer apparatus which is without a keyboard.

On the other hand, the source of electric power for conventional portable computer apparatus is mainly from rechargeable battery which is not convenient to recharge electric power while the user is out of the house. Therefore, if a cover can offer the recharge function at the same time, which maybe increase the effectiveness while using a portable computer apparatus out of home.

In addition, for part of portable computer apparatus, the screen is not able to stand upright, so it is not convenient for the user using the computer apparatus out of home. If a cover is capable of standing the screen upright, it is more convenient for the users to use the portable computer apparatus.

### BRIEF SUMMARY OF THE INVENTION

In order to break through the conventional technology mentioned above, the present invention provides the foldable cover of a computer apparatus to solve that the portable computer apparatus, without a keyboard, with conventional technology is not convenient for inputting data and recharging electric power. Besides, add the design to make the screen stand upright at the same time.

According to the present invention, the foldable cover of a computer apparatus comprises a body of the foldable cover, an inputting module, a power supply module, and at least a support.

The body of the foldable cover has a capacity space for putting a computer apparatus and an extending outer covering. The inputting module, set on outer covering, can connect with the computer apparatus for inputting data via wireless connection or electrical connection. The power supply module is set on the outer covering for supplying electric power to the computer apparatus, and electrically connects with the inputting module for supplying electric power to the inputting module when the inputting module wirelessly connects with the computer apparatus. The support is pivoted on the body of the foldable cover for propping up the body of the foldable cover.

To sum up, according to the foldable cover of the computer apparatus based on the present invention, adding an inputting module makes that a portable computer apparatus without a keyboard be capable of connecting with the inputting module for users inputting data. Besides, add a power supply module to makes the computer apparatus can directly connect with the power supply module for recharging. And with the design of the support for propping up the body of the foldable cover, the computer apparatus is capable of standing upright by being propped up with the body of the foldable cover, which increases the effectiveness and the convenience.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein
FIG. 1 is plan schematic view of a foldable cover of a computer apparatus in accordance with an embodiment of the present invention;
FIG. 2 is a plan schematic view of a folded foldable cover of a computer apparatus in accordance with an embodiment of the present invention;
FIG. 3A is plan schematic view of a embodiment of a foldable cover of a computer apparatus in accordance with the present invention; and
FIG. 3B is a plan schematic view of another embodiment of a foldable cover of a computer apparatus in accordance with the present invention.

### ETAILED DESCRIPTION OF THE INVENTION

The present invention will now be described in detail with reference to the accompanying drawings, wherein the same reference numerals will be used to identify the same or similar elements throughout the several views. It should be noted that the drawings should be viewed in the direction of orientation of the reference numerals.

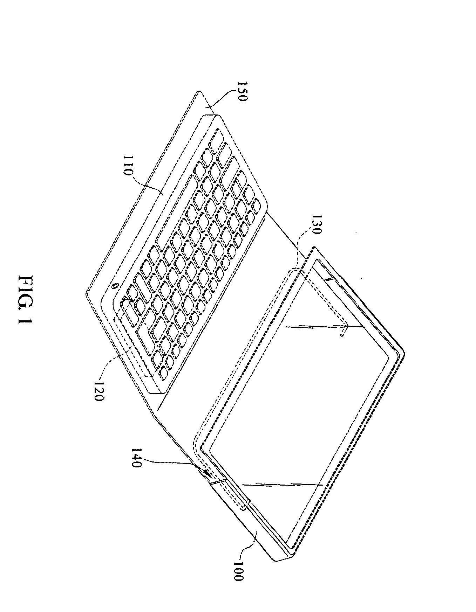

Referring to FIG. 1, is a plan schematic view of a foldable cover of a computer apparatus in accordance with an embodiment of the present invention, wherein a foldable cover of a computer apparatus comprises a body of the foldable cover 100, an inputting module 110, a power supply module 120, and at least a support 130.

The body of the foldable cover 100 comprises a capacity space 140 for putting a computer apparatus 200, and extending an outer covering 150. The body of foldable cover 100 is set a transparent cover for users to watching the screen of the computer apparatus 200. The material of the body of the foldable cover 100 can be leather or cloth, which is only for illustration, and thus not limitative to the present invention.

The inputting module 110, set on the outer covering 150, can be covered up by the body of the foldable cover 100 for avoiding damage from carrying around or putting away. The inputting module 110 comprises a wireless connection system for building a wireless connection with the computer apparatus 200. The wireless connection is such as Blue Tooth transmission, radio frequency, or infrared rays systems. Moreover, the inputting module can be a keyboard, which can be optionally covered for protecting with a protective film. The inputting module 110 can be a membrane keyboard or a mechanical keyboard optionally.

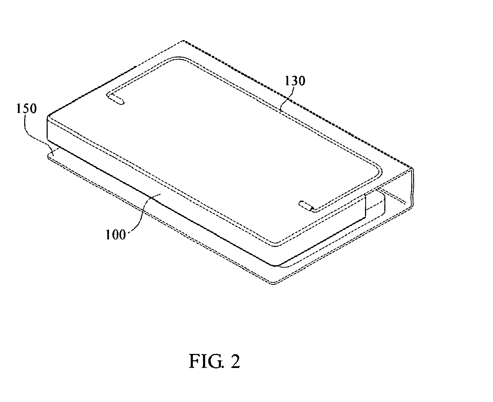

Referring to FIG. 2, which is a plan schematic view of a folded foldable cover of a computer apparatus in accordance with an embodiment of the present invention. The outer covering 150 can fold up the body of the foldable cover 100 and cover the inputting module 110. A support 130 pivoted on the body of the foldable cover 100 for propping up the body of the foldable cover 100 to stand upright on a flat surface. Thus the computer apparatus 200 can stand upright by being propped up with the body of the foldable cover 100 for users' convenience. The support 130 can be put away in the body of the foldable cover 100 when not using the support 130.

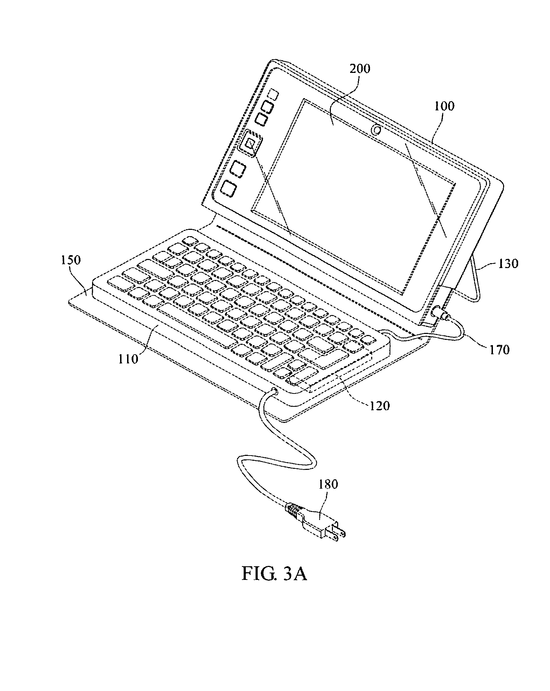

Referring to FIG. 3A, a plan schematic view of a embodiment in accordance with an embodiment of the present invention, which is a foldable cover of a computer apparatus comprising a body of the foldable cover 100, an inputting module 110, a power supply module 120, and at least a support 130. And the computer apparatus 200 is put in the capacity space 140.

The power supply module 120 is set in the outer covering 150 for supplying electric power to the computer apparatus 200, and electrically connects with the inputting module 110. When the inputting module 110 builds a wireless connection with the computer apparatus 200, the power supply module 120 can supply electric power not only to the inputting module 110 but also supply electric power to computer apparatus 200 by electrically connecting with a power supply interface 170. Moreover, the power supply module 120 can comprise at least a battery or rechargeable battery, which can connect with a transformer 180 to be charged from an electric outlet.

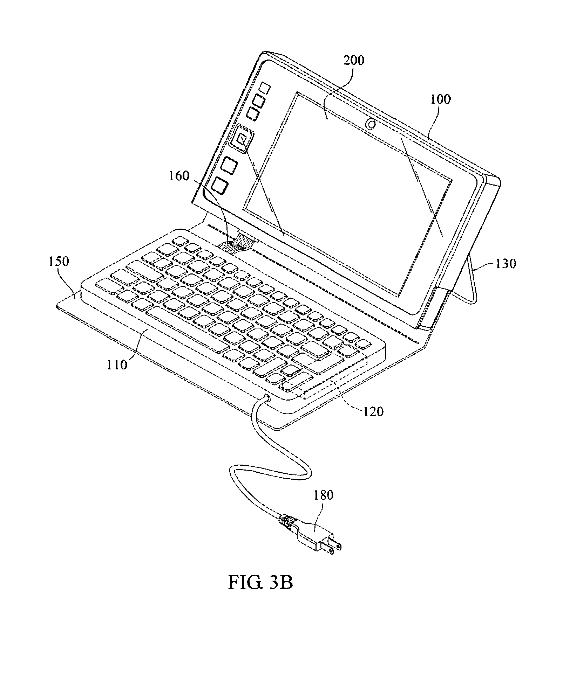

Referring to FIG. 3B, is a plan schematic view of another embodiment of a foldable cover of a computer apparatus in accordance with the present invention. The foldable cover of a computer apparatus comprises a body of the foldable cover 100, an inputting module 110, a power supply 120, and at least a support 130. The computer apparatus 200 is put in the capacity space 140.

The inputting module 110 comprises a connection interface 160 electrically connecting with the computer apparatus 200. The inputting module 110 can electrically connects with the connection interface 160 for inputting data to the computer apparatus 200. When the inputting module 110 build a wire connection with the computer apparatus 200, the power supply module 120 also can connect with the connection interface 160 for supplying electric power to the computer apparatus 200. In addition, the power supply 120 can comprise at least a battery or rechargeable battery; further can connect with a transformer 180 to charge from an electric outlet.

When users use the computer apparatus 200, they can put the computer apparatus 200 into the foldable cover of the computer 100, and stretch the support 130 out to make it stand upright. And then the connection interface 160 connects the inputting module 110 and the computer apparatus 200 for inputting data and supplying power; When the inputting module 110 wirelessly connects with the computer apparatus 200, the power supply module 120 can connects with the computer apparatus 200 via the power supply interface 170 for supplying electric power to the computer apparatus 200 and for charging for the computer apparatus 200.

On the other hand, in order to enhance the effectiveness in the foldable cover, further add a handle to the body of the foldable cover 100 (not indicated in the FIG.) for the user to carry, or add a buckle (not indicated in the FIG.) for the outer covering 150 closely covering the body of the foldable cover 100.

To sum up, the new technique of the present invention makes the computer apparatus 200 can connect with the inputting module 110 of the foldable cover for users inputting data, and the computer apparatus 200 further can directly connect with the power supply module 120 for recharging. Moreover, with the design of the support 130, the computer apparatus 200 is capable of standing upright by being propped up with the body of the foldable cover 100, which enhances the effectiveness and the convenience.

While the invention has been described by way of example and in terms of the preferred embodiment, it is to be understood that the invention is not limited to the disclosed embodiments, and it will be obvious that the same may be varied in many ways. Such variations are not to be regarded as a departure from the spirit and scope of the invention, and all such modifications as would be obvious to one skilled in the art are intended to be included within the scope of the following clams.

## Claims

1. A foldable cover of a computer apparatus, comprising:
a body of said foldable cover, having a capacity space for putting said computer apparatus, and extending an outer covering;
an inputting module, is set on said outer covering, and connected with said computer apparatus for inputting data; and
at least a support, is pivoted on said body of said foldable cover for supporting said body of said foldable cover.

2. A foldable cover of a computer apparatus according to claims 1 further comprises a power supply module, set in said outer covering for providing electric power to said inputting module and said computer apparatus, and electrically connected with said inputting module.

3. A foldable cover of a computer apparatus according to claims 2, wherein said power supply module comprises at least comprises a battery.

4. A foldable cover of a computer apparatus according to claims 3, wherein said battery is a rechargeable battery.

5. A foldable cover of a computer apparatus according to claims 2, wherein said power supply module further comprises a power supply interface.

6. A foldable cover of a computer apparatus according to claims 2, wherein said power supply module further comprises a transformer.

7. A foldable cover of a computer apparatus according to claims 2, wherein said inputting module further comprises a connection interface for electrically connecting with said computer apparatus, and said power supply module connects with said connection interface for providing electric power to said computer apparatus.

8. A foldable cover of a computer apparatus according to claims 1, wherein said inputting module further comprises a connection interface for electrically connecting with said computer apparatus.

9. A foldable cover of a computer apparatus according to claims 1, wherein said inputting module further comprises a wireless connection system for building a wireless connection with said computer apparatus.

10. A foldable cover of a computer apparatus according to claims 1, wherein said inputting module further comprises a protective film.

11. A foldable cover of a computer apparatus according to claims 1, wherein said inputting module is a keyboard.

12. A foldable cover of a computer apparatus according to claims 1, wherein said body of said foldable cover further set a transparent cover.
